(19) **Europäisches Patentamt**
**European Patent Office**
**Office européen des brevets**

(11) **EP 3 797 053 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **19726901.2**

(22) Anmeldetag: **16.05.2019**

(51) Internationale Patentklassifikation (IPC):
***B60R 1/00*** *(2022.01)*

(52) Gemeinsame Patentklassifikation (CPC):
**B60R 1/00;** B60R 2300/303; B60R 2300/607

(86) Internationale Anmeldenummer:
**PCT/DE2019/200044**

(87) Internationale Veröffentlichungsnummer:
**WO 2019/223840 (28.11.2019 Gazette 2019/48)**

(54) **VERFAHREN UND VORRICHTUNG ZUM ANZEIGEN EINER FAHRZEUGUMGEBUNG**

METHOD AND DEVICE FOR DISPLAYING VEHICLE SURROUNDINGS

PROCÉDÉ ET DISPOSITIF D'AFFICHAGE D'UN ENVIRONNEMENT DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2018 DE 102018207976**

(43) Veröffentlichungstag der Anmeldung:
**31.03.2021 Patentblatt 2021/13**

(73) Patentinhaber: **Continental Automotive GmbH**
**30165 Hannover (DE)**

(72) Erfinder:
• **FRIEBE, Markus**
**90411 Nürnberg (DE)**
• **SRIKANTH, Sukumar**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
DE-A1-102010 010 906     US-A1- 2010 201 818
US-A1- 2016 207 459

**Beschreibung**

Die Erfindung betrifft ein Verfahren und eine Vorrichtung zum Anzeigen einer Fahrzeugumgebung in einem Fahrzeug während eines momentanen Zeitpunkts.

Ein Fahrzeug kann ein Fahrassistenzsystem aufweisen, das eine Fahrzeugumgebung für einen Fahrzeugpassagier im Inneren des Fahrzeugs in einer Anzeigeeinrichtung, wie einem Bildschirm, anzeigt bzw. wiedergibt. Ein solches Fahrassistenzsystem kann auch als Surround-View-System bezeichnet werden und weist üblicherweise eine oder mehrere Fahrzeugkameras auf, die an dem Fahrzeug angebracht sind und unterschiedliche Sichtbereiche haben bzw. Blickwinkel ermöglichen.

Obwohl mehrere Sichtbereiche durch die unterschiedlichen Fahrzeugkameras erfasst werden, bleibt zumindest ein Blindbereich, auch als blind-spot bezeichnet, der außerhalb sämtlicher Sichtbereiche liegt und daher nicht in den Kamerabildern enthalten ist. Ein Beispiel für einen solchen Blindbereich ist eine Bodenebene die von dem Fahrzeug im betrachteten Moment überfahren und damit verdeckt wird. Denn üblicherweise sind die verschiedenen Fahrzeugkameras z.B. an der Fahrzeugfront, dem Fahrzeugheck und den Fahrzeugseiten angeordnet und blicken von dort weg, so dass die Bodenebene stets vom Fahrzeug selbst bzw. seiner Karosserie verdeckt wird. Deshalb wird dieser Bereich meist in der Anzeige ausgespart und beispielsweise durch einen Platzhalter besetzt. Dieser Platzhalter ist nicht nur optisch wenig ansprechend, sondern kann auch für den Fahrzeugpassagier irritierend sein.

Die DE 10 2010 010 906 A1 beschreibt ein Verfahren zur Erzeugung einer Darstellung eines Fahrzeuges und einer aktuellen Fahrzeugumgebung des Fahrzeuges aus Kamerabildern, die zu verschiedenen Zeiten von wenigstens einer an dem Fahrzeug angeordneten Kamera aufgenommen werden. Dabei wird eine Darstellung wenigstens eines in einem aktuellen Kamerabild nicht erfassten Umgebungsbereiches der Fahrzeugumgebung aus wenigstens einem zu einer früheren Zeit aufgenommenen und gespeicherten Kamerabild erzeugt, in dem dieser wenigstens eine Umgebungsbereich erfasst ist. Dazu wird aus den aufgenommenen Kamerabildern ein optischer Fluss ermittelt, aus dem Bewegungsdaten einer Bewegung des Fahrzeuges ermittelt werden. Anhand der ermittelten Bewegungsdaten wird wenigstens ein gespeichertes Kamerabild ermittelt, in dem ein in einem aktuellen Kamerabild nicht erfasster Umgebungsbereich erfasst ist, und es wird ein diesen Umgebungsbereich abbildender Bildbereich des ermittelten wenigstens einen gespeicherten Kamerabildes ermittelt und zur Erzeugung der Darstellung dieses Umgebungsbereiches verwendet.

Es ist daher eine Aufgabe der Erfindung, eine Möglichkeit zur verbesserten Anzeige einer Fahrzeugumgebung in einem Fahrzeug zu schaffen.

Diese Aufgabe wird durch die Gegenstände der unabhängigen Ansprüche gelöst. Vorteilhafte Ausführungsformen und Weiterbildungen der Erfindung sind in den abhängigen Ansprüchen, der Beschreibung und den begleitenden Figuren angegeben.

Ein erster Aspekt der Erfindung betrifft ein Verfahren zum Anzeigen einer Fahrzeugumgebung in einem Fahrzeug während eines momentanen, zweiten Zeitpunkts. Unter dem momentanen Zeitpunkt kann verstanden werden, dass die Anzeige der Fahrzeugumgebung im Wesentlichen in Echtzeit während des Fahrbetriebs erfolgt. Das Fahrzeug kann sich mit einer z.B. aus Odometrie-Daten bestimmbaren Fahrzeuggeschwindigkeit in irgendeine Richtung bewegen, wobei die Echtzeit-Anzeige mit einer geeigneten Bildwiederholrate erfolgt.

Das erfindungsgemäße Verfahren sieht die folgenden Schritte vor:

- Zunächst wird ein erstes Blindbereichsbild, z.B. ein synthetisiertes bzw. gerendertes Bild, mit einer Vielzahl von Blindbereichsbildpunkten bereitgestellt, das eine Bildsynthese, z.B. ein Rendering, eines außerhalb eines Sichtbereichs einer Fahrzeugkamera angeordneten Blindbereichs der Fahrzeugumgebung zu einem dem zweiten Zeitpunkt vorangehenden, ersten Zeitpunkt enthält. Damit liegt also der erste Zeitpunkt zeitlich vor dem betrachteten momentanen zweiten Zeitpunkt.

- Dann erfolgt ein Anordnen, z.B. Transformieren, eines jeweiligen ersten Blindbereichsbildpunktes des Blindbereichs in einer für den zweiten Zeitpunkt abgeschätzten, z.B. prädizierten, Neu-Position. Das heißt, dass das Blindbereichsbild eine Mehrzahl von Blindbereichsbildpunkten aufweist, die von ihrer Alt-Position, wie sie im Blindbereichsbild enthalten ist, in ihrer auf einer Schätzung, Prädiktion, Transformation, Interpolation oder ähnlichem beruhenden Neu-Position angeordnet werden. Anstatt eines jeweiligen einzelnen Blindbereichsbildpunktes kann auch eine Kombination von Blindbereichspunkten herangezogen werden, um dadurch eventuelle Aliasing-Effekte zu reduzieren.

- Dann wird bestimmt, ob die Neu-Position des jeweiligen ersten Blindbereichsbildpunkt zum zweiten Zeitpunkt weiterhin innerhalb des Blindbereichs liegt. So könnte der betrachtete, neu angeordnete Blindbereichsbildpunkt aufgrund der Fahrzeugbewegung nun auch außerhalb des Blindbereichs liegen.

- Es erfolgt dann ein Erzeugen, z.B. Synthetisieren, Rendern usw., eines jeweiligen zweiten Blindbereichsbildpunktes, z.B. eines gerenderten Bildpunktes, für den zweiten Zeitpunkt, indem der jeweilige erste Blindbereichsbildpunkt anhand von Bewegungsdaten des Fahrzeugs bewegungskompensiert synthetisiert wird, wenn die Neu-Position als innerhalb des Blindbereichs liegend bestimmt wird. Da sich das Fahrzeug von Blindbereichsbild zu Blindbereichsbild durch seine Fahrt weiterbewegen kann, kann der Blindbereichsbildpunkt seine Position ebenfalls verändern, so dass zum Erzeugen des zweiten Blindbereichsbildpunkts die Bewegungsdaten des Fahrzeugs berücksichtigt werden. Wenn sich das Fahrzeug nicht bewegt, kann der zweite Blindbereichsbildpunkt dem ersten entsprechen. Die Bewegungsdaten können z.B. aus der Odometrie eines Fahrzeugsystems oder aus einer Bewegungsabschätzung aus mehreren Kamerabildern erhalten werden.

Mit dieser Konfiguration bietet das vorgeschlagene Verfahren gleich mehrere Vorteile. So erfolgt eine zeitweise Rekonstruktion des Blindbereichs der Fahrzeugumgebung, die ohne einen Platzhalter auskommt, der den Blindbereich ohne Bezug zur anzuzeigenden Fahrzeugumgebung dauerhaft überdecken würde. Zudem muss aufgrund des im Prinzip rekursiven Verfahrens nur ein einziges erstes Blindbereichsbild vorgehalten und bereitgestellt werden, so dass signifikante Speicherressourcen in z.B. einer Speichereinheit und/oder einer Datenverarbeitungseinheit eingespart werden können. Damit können die Bereitstellungskosten eines nach diesem Verfahren betriebenen Fahrassistenzsystems reduziert werden.

Eine vorteilhafte Weiterbildung sieht vor, dass für den Fall, dass die bestimmte Neu-Position des jeweiligen ersten Blindbereichsbildpunkts als außerhalb des Blindbereichs liegend bestimmt wird, der jeweilige zweite Blindbereichsbildpunkt für den zweiten Zeitpunkt erzeugt werden kann, indem der jeweilige erste Blindbereichsbildpunkt anhand von wenigstens einem zum ersten Zeitpunkt aufgenommenen, bereitgestellten Kamerabild synthetisiert wird. In diesem Fall dient also nicht mehr ein bereits synthetisiertes, z.B. gerendertes, Bild als Basis für die weitere Bildsynthese, z.B. Rendering, sondern ein von der Fahrzeugumgebung aufgenommenes Kamerabild. Dies spart ebenfalls signifikant Speicherressourcen, da nur ein einziges Kamerabild vorgehalten und bereitgestellt werden muss. Wenn das Fahrzeug mehrere Fahrzeugkameras, z.B. eine mit Blickrichtung von der Fahrzeugfront, eine mit Blickrichtung vom Fahrzeugheck und jeweils eine mit Blickrichtung von jeder lateralen Fahrzeugseite, aufweist, können pro Fahrzeugkamera jeweils ein eigenes Kamerabild bereitgestellt werden.

In einer weiteren Ausführungsform kann anhand eines aus den Bewegungsdaten erhaltenen Bewegungsvektors des jeweiligen ersten Blindbereichsbildpunkts bestimmt werden, von welcher einzelnen Fahrzeugkamera aus einer Mehrzahl von unterschiedlichen angeordneten und/oder ausgerichteten Fahrzeugkameras mit jeweils unterschiedlichen Sichtbereichen das für die Bildpunktsynthese dienende Kamerabild bereitgestellt wird. So kann beispielsweise ein sich bedingt durch die Fahrzeugbewegung in den Sichtbereich einer vor das Fahrzeug blickenden Fahrzeugkamera bewegter erster Blindbereichsbildpunkt anhand des einen Kamerabildes dieser Fahrzeugkamera erzeugt bzw. synthetisiert, z.B. gerendert, werden.

Je nach Bewegungsrichtung des Fahrzeugs, also Geradeausfahrt, Rückwärtsfahrt und/oder Kurvenfahrt kann der Bewegungsvektor im jeweiligen Sichtbereich einer entsprechenden Fahrzeugkamera angeordnet sein. Dabei kann zum Bereitstellen dasjenige Kamerabild der jeweiligen Kamera ausgewählt werden, in deren Sichtbereich der Bewegungsvektor angeordnet ist.

Um signifikant Speicherressourcen einzusparen, ist es vorteilhaft, wenn genau ein einziges Kamerabild bzw. ein einzelner Frame pro vorhandener Fahrzeugkamera zum Bereitstellen vorgehalten wird.

Diesbezüglich kann es auch vorteilhaft sein, wenn genau ein einziges Blindbereichsbild für den ersten Zeitpunkt zum Bereitstellen vorgehalten wird.

Um ein z.B. auf einem Bildschirm des Fahrzeugs anzuzeigendes Anzeigebild der Fahrzeugumgebung wiedergeben zu können, kann ein aus den jeweiligen zweiten Blindbereichsbildpunkten für den zweiten Zeitpunkt erzeugtes bzw. synthetisiertes, z.B. gerendertes, zweites Blindbereichsbild mit wenigstens einem momentanen Kamerabild des zweiten Zeitpunkts kombiniert werden. In diesem Fall werden also die Sichtbereiche durch Echtzeit-Kamerabilder und der Blindbereich durch das zweite Blindbereichsbild für den momentanen zweiten Zeitpunkt dargestellt.

Insbesondere bei Initialstart einer nach diesem Verfahren betriebenen Vorrichtung und/oder Fahrassistenzsystem kann die Situation auftreten, dass noch kein erstes Blindbereichsbild des Blindbereichs vorliegt. Dann kann zum Ausblenden des Blindbereichs ein im Inneren des Fahrzeugs anzuzeigendes Anzeigebild in den Sichtbereich der jeweiligen Fahrzeugkamera, z.B. der Frontkamera, verschoben werden.

Das Verfahren lässt sich besonders vorteilhaft einsetzen, wenn der Blindbereich eine vom Fahrzeug befahrene bzw. durch die Fahrzeugkarosserie verdeckte Bodenebene ist. Anstatt eines Platzhalters kann dann ein synthetisiertes, z.B. gerendertes, Anzeigebild angezeigt werden.

Das vorstehend beschriebene Verfahren kann z.B. in einer Steuereinrichtung, wie einem Steuergerät des Fahrzeugs implementiert sein. Die Steuereinrichtung kann eine Speichereinrichtung und eine Datenverarbeitungseinrichtung aufweisen.

Ein weiterer Aspekt der Erfindung betrifft eine Vorrichtung zum Anzeigen einer Fahrzeugumgebung in einem Fahrzeug während eines momentanen, zweiten Zeitpunkts. Die Vorrichtung weist auf:

- Wenigstens eine Fahrzeugkamera zum Erfassen eines entsprechenden Sichtbereichs der Fahrzeugumgebung.

- Eine Speichereinrichtung, in der genau ein erstes Blindbereichsbild vorgehalten ist, das eine Bildsynthese eines außerhalb des Sichtbereichs angeordneten Blindbereichs der Fahrzeugumgebung zu einem dem zweiten Zeitpunkt vorangehenden, ersten Zeitpunkt enthält.

- Eine Datenverarbeitungseinrichtung die dazu eingerichtet ist, i) einen jeweiligen ersten Blindbereichsbildpunkt des Blindbereichs in einer für den zweiten Zeitpunkt abgeschätzten Neu-Position anzuordnen, ii) zu bestimmen, ob die Neu-Position des jeweiligen ersten Blindbereichsbildpunktes zum zweiten Zeitpunkt weiterhin innerhalb des Blindbereichs liegt, und iii) einen jeweiligen zweiten Blindbereichsbildpunkt für den zweiten Zeitpunkt zu erzeugen, indem der jeweilige erste Blindbereichsbildpunkt anhand von Bewegungsdaten des Fahrzeugs bewegungskompensiert wird, wenn die Neu-Position als innerhalb des Blindbereichs liegend bestimmt wird.

Die Vorrichtung kann entsprechend des vorstehend beschriebenen Verfahrens weitergebildet werden und bietet insbesondere den Vorteil, dass durch die im Prinzip rekursive Vorgehensweise signifikant Speicherressourcen eingespart werden können.

Die Erfindung eignet sich insbesondere als Fahrassistenzsystem für ein Fahrzeug, mit einer im Inneren des Fahrzeugs angeordneten Anzeigeeinrichtung, wie z.B. einem Bildschirm.

Im Folgenden werden vorteilhafte Ausführungsformen der Erfindung unter Bezugnahme auf die beigefügten Figuren näher erläutert. Es zeigen:

Fig. 1      ein Fahrzeug mit einem Fahrassistenzsystem gemäß einem Aspekt, das eine Vorrichtung zum Anzeigen einer Fahrzeugumgebung gemäß einem weiteren Aspekt der Erfindung aufweist,

Fig. 2A      ein Schema für eine Erzeugung eines Blindbereichsbildes, wobei als Basis ein vorheriges, synthetisiertes Blindbereichsbild dient,

Fig. 2B      ein Schema für eine Erzeugung eines Blindbereichsbildes, wobei als Basis ein vorheriges, aufgenommenes Kamerabild dient,

Fig. 2C      ein Schema für eine Erzeugung eines Blindbereichsbildes, wobei als Basis ein vorheriges, aufgenommenes Kamerabild dient, und

Fig. 3      ein Flussdiagramm für ein Verfahren gemäß einem weiteren Aspekt der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

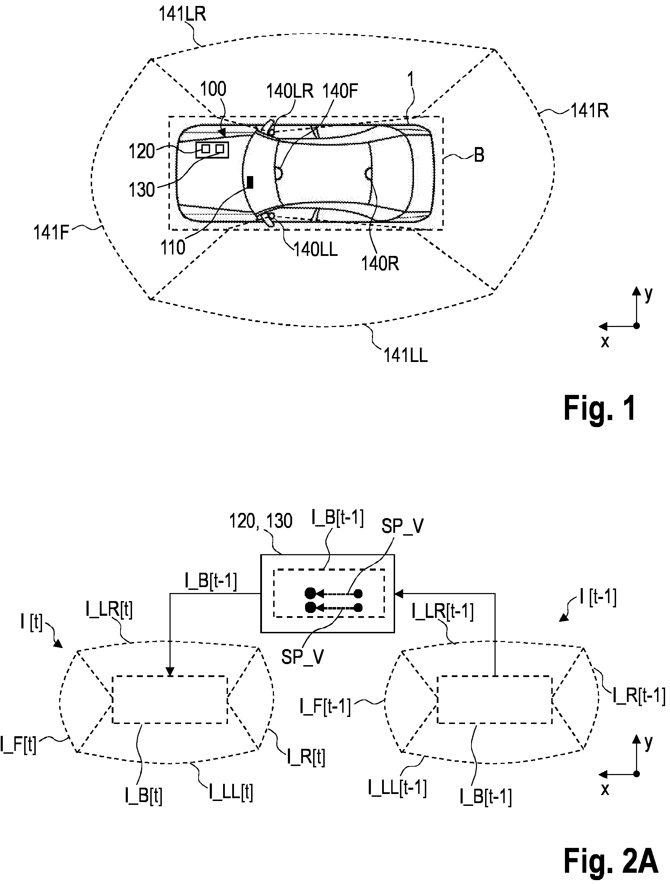

Figur 1 zeigt ein auf einer Bodenebene stehendes Fahrzeug 1, das sich im Wesentlichen in den Richtungen x und y bewegen kann und das über eine Vorrichtung 100 in Form eines Fahrassistenzsystems bzw. Surround-View-Systems verfügt. Dieses ermöglicht es einem Fahrzeugpassagier, sich eine Rundumsicht einer momentanen Fahrzeugumgebung im Inneren des Fahrzeugs als Anzeige bzw. bildliche Wiedergabe anzeigen zu lassen.

Hierzu weist die Vorrichtung 100 eine im Inneren des Fahrzeugs 1 angeordnete Anzeigeeinrichtung 110 in Form eines Bildschirms auf, die ein Anzeigebild I optisch darstellt. Des Weiteren verfügt die Vorrichtung 100 über eine mit der Anzeigevorrichtung 110 zusammenwirkende Datenverarbeitungseinrichtung 120 mit wenigstens einem (nicht näher bezeichneten) Prozessor und über eine ebenfalls damit zusammenwirkende Speichereinrichtung 130. Zudem weist die Vorrichtung 100 eine Mehrzahl von Fahrzeugkameras 140F, 140R, 140LL, 140LRauf, die an unterschiedlichen Positionen des Fahrzeugs 1 angebracht sind und unterschiedliche Blickwinkel bzw. Sichtbereiche 141F, 141R, 141LL, 141LR haben. So sind die Fahrzeugkamera 140F an der Fahrzeugfront, die Fahrzeugkamera 140R am Fahrzeugheck, die Fahrzeugkamera 140LL lateral links und die Fahrzeugkamera 140LR lateral rechts angeordnet. Die Sichtbereiche 141F, 141R, 141LL, 141LR lassen sich als jeweiliges Kamerabild I_F, I_R, I_LL, I_LR erfassen und werden direkt in der Anzeigeeinrichtung 110 wiedergeben und ggf. in der Speichereinrichtung 130 (zwischen-)gespeichert. Zum Anzeigen werden die Kamerabilder I_F, I_R, I_LL, I_LR durch die Datenverarbeitungseinrichtung 120 zu dem Anzeigebild I zusammengesetzt bzw. kombiniert (siehe Figuren 2A-2C).

Aus Figur 1 geht hervor, dass sich in der Bodenebene, bedingt durch das sich darauf befindliche Fahrzeug 1 bzw. dessen Karosserie, ein Blindbereich B ergibt, der in keinem der Sichtbereiche 141F, 141R, 141LL, 141LR liegt und daher von keiner der Fahrzeugkameras 140F, 140R, 140LL, 140LR erfasst werden kann, da die Karosserie die jeweilige Sicht versperrt. Folglich lässt sich für den Blindbereich B kein direktes Kamerabild als ein Blindbereichsbild I_B des Anzeigebilds I in der Anzeigeeinrichtung 110 wiedergeben.

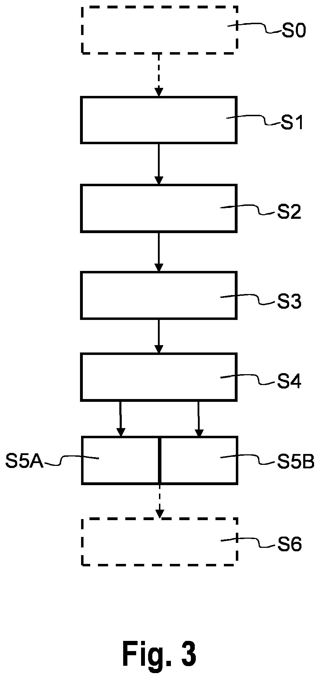

Um den Blindbereich B dennoch mit einer im Wesentlichen fotorealistischen Anzeige in Form des Blindbereichsbilds I_B in der Anzeigeeinrichtung 110 darzustellen, kann die Vorrichtung 100 mit dem nachfolgend anhand der Figuren 2A-2C und 3 beschriebenen Verfahren betrieben werden.

Prinzipiell soll die Anzeige der Fahrzeugumgebung in der Anzeigeeinrichtung 110 im Wesentlichen in Echtzeit zu einem momentanen Zeitpunkt t erfolgen, das Anzeigebild I also die Fahrzeugumgebung zum momentanen Zeitpunkt t enthalten. Dies ist nachfolgend sowie in den Figuren 2A-2C durch einen Zeitbezug [t] in den Bezugszeichen angedeutet. Dementsprechend ist ein dem momentanen, zweiten Zeitpunkt t vorangehender, erster Zeitpunkt t-1 in den Figuren 2A-2C mit [t-1] referenziert.

Bei Initialstart der Vorrichtung 100 wird in einem optionalen Schritt S0 der Blindbereich B im Anzeigebild I der Anzeigeeinrichtung 110 ausgeblendet, indem das Anzeigebild I der Fahrzeugumgebung so weit in einen der Sichtbereiche 141F, 141R, 141LL, 141LR der Fahrzeugkameras 140F, 140R, 140LL, 140LR verschoben wird, dass der Blindbereich B damit ausgeblendet ist. Die Auswahl des jeweiligen Sichtbereichs 141F, 141R, 141LL, 141LR kann z.B. in Abhängigkeit der Bewegungsrichtung x, y des Fahrzeugs, dessen Bewegungsdaten, wie einer Fahrzeuggeschwindigkeit v_x, v_y, dem Lenkwinkel, der Gangwahl des Getriebes usw. erfolgen. Anschaulich ausgedrückt, eilt das Anzeigebild I der eigentlichen Fahrzeugumgebung zum Zeitpunkt t z.B. um eine Fahrzeuglänge voraus, so dass der Blindbereich B ausgeblendet ist. Damit lässt sich ein initiales Blindbereichsbild I_B[t-1] speichern und vorhalten, das anstatt des Blindbereichs B einen Bildausschnitt des jeweiligen Kamerabildes IF[t-1], IR[t-1], ILL[t-1], ILR[t-1] enthält.

In einem Schritt S1 wird dann zum momentanen Zeitpunkt t das Blindbereichsbild I_B[t-1] des Zeitpunkts t-1 aus der Speichereinrichtung 130 bereitgestellt, welches nur im ersten Durchlauf nach dem Initialstart der Vorrichtung 100 den oben erläuterten Bildinhalt enthält, im laufenden Betrieb jedoch wie nachfolgend beschrieben laufend aktualisiert wird. Wenn sich das Fahrzeug 1 mit z.B. 15 m/s in x-Richtung fortbewegt, wird der Bildinhalt des Blindbereichsbildes I_B mit einer entsprechenden Bildwiederholrate aktualisiert und enthält bei Bereitstellung für den jeweiligen momentanen Zeitpunkt t den Bildinhalt zum vorhergehenden Zeitpunkt t-1.

In einem Schritt S2 wird durch die Datenverarbeitungseinrichtung 120 ein jeweiliger erster Blindbereichsbildpunkt IB_SP[t-1] des Blindbereichsbildes I_B[t-1] in einer für den momentanen Zeitpunkt t abgeschätzten bzw. prädizierten Neu-Position durch z.B. eine Transformation oder ähnliches angeordnet, wozu insbesondere die Bewegungsdaten v_x, v_y des Fahrzeugs 1 berücksichtigt werden. Diese werden z.B. von einem Fahrzeugsystem, z.B. einem Fahrzeugbus, zur Verfügung gestellt oder aus den Kamerabildern I_F, I_R, I_LL, I_LR bestimmt. Die Abschätzung bzw. Prädiktion der Neu-Position kann z.B. durch ein geeignetes Bildverarbeitungsverfahren erfolgen. Hat sich das Fahrzeug 1 mit z.B. v_x = 15 m/s in x-Richtung weiterbewegt, wird ein entsprechender Bewegungsvektor SP_V für den jeweiligen ersten Blindbereichsbildpunkt IB_SP[t-1] bestimmt und dieser als zweiter Blindbereichsbildpunkt IB_SP[t] entsprechend in seiner Neu-Position angeordnet, wie dies in Figur 2A angedeutet ist.

Dann wird in einem Schritt S3 durch die Datenverarbeitungseinrichtung 120 bestimmt, ob die Neu-Position des jeweiligen Blindbereichsbildpunktes IB_SP zum momentanen Zeitpunkt t weiterhin innerhalb des Blindbereichs B liegt. In dem in Figur 2A gezeigten Ausführungsbeispiel liegt ein jeweiliger um den Bewegungsvektor SP_V verlagerter bzw. transformierter Blindbereichsbildpunkt IB_SP weiterhin innerhalb des Blindbereichs B.

In diesem Fall wird in der Datenverarbeitungseinrichtung 120 in einem Schritt S4 ein jeweiliger zweiter Blindbereichsbildpunkt IB_SP[t] für den momentanen Zeitpunkt t erzeugt, z.B. gerendert, indem der jeweilige erste Blindbereichsbildpunkt IB_SP[t-1] anhand der Bewegungsdaten des Fahrzeugs 1 in einem Schritt S5A bewegungskompensiert, d.h. insbesondere um den Bewegungsvektor SP_V verlagert wird. Wie in Figur 2A für zwei exemplarische Blindbereichsbildpunkt IB_SP angedeutet, wird dies so oft wiederholt, bis vorzugweise jeder erste Blindbereichsbildpunkt IB_SP [t-1] in seiner Neu-Position angeordnet ist und daraus ein zweites Blindbereichsbild I_B[t] erzeugt, z.B. gerendert, und in dem Anzeigebild I [t] anstelle des Blindbereichs B angezeigt wird. Das zweite Blindbereichsbild I_B[t] wird dann in der Speichereinrichtung 130 gespeichert und im nächsten Durchlauf des Verfahrens beginnend mit Schritt S1 als inhaltlich aktualisiertes erstes Blindbereichsbild I_B[t-1] für einen weiteren zweiten Zeitpunkt t+n bereitgestellt.

Dies lässt sich verallgemeinern zu

$$I\_B \ [x, \ y, \ t] \ = \ I\_B \ [x \ + \ v\_x, \ y \ + \ v\_y, \ t{-}1],$$

wobei I_B das Blindbereichsbild, v_x und v_y die Bewegungsdaten in x- bzw. y-Richtung, t-1 der erste Zeitpunkt und t der momentane, zweite Zeitpunkt sind.

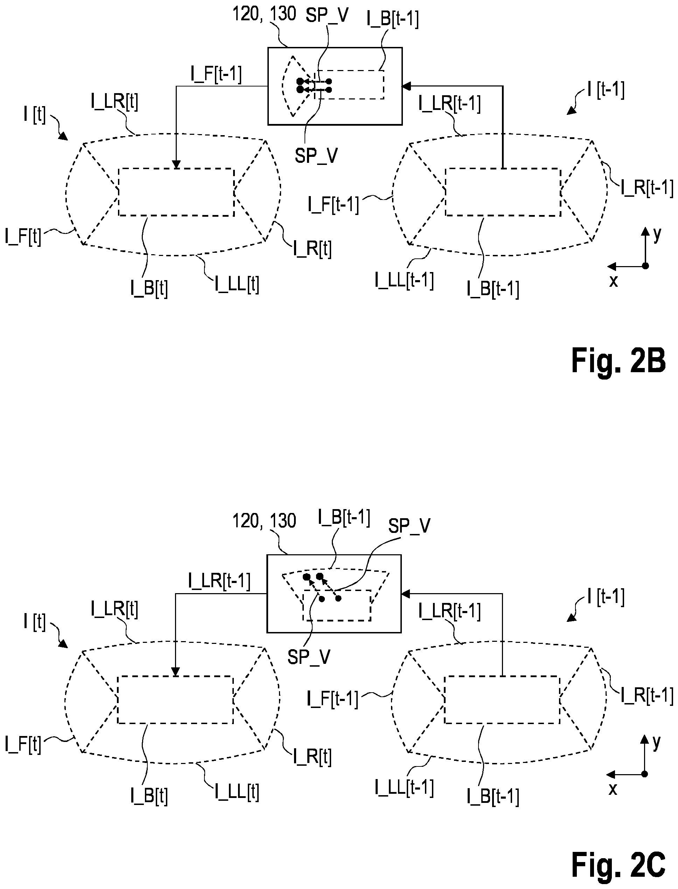

In Figur 2B ist ein anderer möglicher Fall der Bestimmung im Schritt S3 gezeigt, in dem die Neu-Position des jeweiligen ersten Blindbereichsbildpunktes IB_SP[t-1] zum momentanen Zeitpunkt t nicht mehr innerhalb, sondern außerhalb des Blindbereichs B liegt. So liegt in dem in Figur 2B gezeigten Ausführungsbeispiel der jeweilige um den Bewegungsvektor SP_V verlagerte bzw. transformierte Blindbereichsbildpunkt IB_SP durch die Bewegung des Fahrzeugs in x-Richtung im Sichtbereich 141F der Fahrzeugkamera 140F.

In diesem Fall wird der jeweilige zweite Blindbereichsbildpunkt IB_SP[t] für den momentanen Zeitpunkt t im Schritt S4 erzeugt, z.B. gerendert, indem der jeweilige erste Blindbereichsbildpunkt IB_SP[t] anhand des dem zum ersten Zeitpunkt t-1 aufgenommenen, bereitgestellten Kamerabildes I_F[t-1] in einem Schritt S5B synthetisiert, z.B. gerendert, wird.

Figur 2C zeigt diesen Fall der Bestimmung im Schritt S3 am Beispiel einer rechten Kurvenfahrt, die eine Bewegung sowohl in x- als auch y-Richtung mit den Bewegungsdaten v_x, v_y umfasst. Wie in Figur 2C gezeigt, liegt der jeweilige um den Bewegungsvektor SP_V verlagerte bzw. transformierte Blindbereichsbildpunkt IB_SP durch die Bewegung des Fahrzeugs in x-Richtung nun im Sichtbereich 141LR der Fahrzeugkamera 140LR.

In diesem Fall wird im Schritt S4 wird der jeweilige zweite Blindbereichsbildpunkt IB_SP[t] für den momentanen Zeitpunkt t erzeugt, z.B. gerendert, indem der jeweilige erste Blindbereichsbildpunkt IB[t-1] anhand des zum ersten Zeitpunkt t-1 aufgenommenen, bereitgestellten Kamerabildes I_LR[t-1] im Schritt S5B synthetisiert, z.B. gerendert, wird. Wie in Figur 2B für zwei exemplarische Blindbereichsbildpunkt IB_SP angedeutet, wird dies so oft wiederholt, bis vorzugweise jeder erste Blindbereichsbildpunkt IB_SP [t-1] in seiner Neu-Position angeordnet ist und daraus ein zweites Blindbereichsbild I_B[t] erzeugt, z.B. gerendert, und in dem Anzeigebild I [t] anstelle des Blindbereichs B angezeigt wird. Das zweite Blindbereichsbild I_B[t] wird dann in der Speichereinrichtung 130 gespeichert und im nächsten Durchlauf des Verfahrens beginnend mit Schritt S1 als inhaltlich aktualisiertes erstes Blindbereichsbild I_B[t-1] für einen weiteren zweiten Zeitpunkt t+n bereitgestellt.

In den Schritten S5B gemäß den Figuren 2B und 2C erfolgt die Erzeugung des anzuzeigenden Blindbereichsbildpunktes IB_SP[t] demnach durch eine Bildsynthese, z.B. Rendern, eines zum Zeitpunkt t-1 aufgenommenen Kamerabildes I_F[t-1] bzw. I_LR[t-1]. Dieses Prinzip lässt sich selbstverständlich ohne Weiteres auf die übrigen Kamerabilder I_R und I_LL übertragen.

Dies lässt sich verallgemeinern zu

$$\mathrm{I\_B \ [x, \ y, \ t] \ = \ I\_F, \ I\_R, \ I\_LL, \ I\_LR \ [x \ + \ v\_x, \ y \ + \ v\_y, \ t-1],}$$

wobei I_B das Blindbereichsbild, I_F-I_LR die Kamerabilder der Fahrzeugkameras 140F-140LR, v_x und v_y die Bewegungsdaten in x-bzw. y-Richtung, t-1 der erste Zeitpunkt und t der momentane, zweite Zeitpunkt sind.

In einem optionalen Schritt S6 wird dann aus dem zweiten Blindbereichsbild I_B[t] und den momentanen Kamerabildern I_F[t], I_R[t], I_LL[t], I_LR[t] des zweiten Zeitpunkts t das Anzeigebild I für die Anzeigeeinrichtung 110 kombiniert.

Figur 3 zeigt das vorstehend beschriebene Verfahren mit dem optionalen Schritt S0, den Schritten S1-S5 sowie dem optionalen Schritt S6 noch einmal zusammengefasst in einem Flussdiagramm.

**Patentansprüche**

1. Verfahren zum Anzeigen einer Fahrzeugumgebung in einem Fahrzeug (1) während eines momentanen, zweiten Zeitpunkts (t), mit den Schritten:

   - Bereitstellen (S1) eines ersten Blindbereichsbildes (I_B[t]), das eine Bildsynthese eines außerhalb eines Sichtbereichs (141F, 141R, 141LL, 141LR) einer Fahrzeugkamera (140F, 140R, 140LL, 140LR) angeordneten Blindbereichs (B) der Fahrzeugumgebung zu einem dem zweiten Zeitpunkt (t) vorangehenden, ersten Zeitpunkt (t-1) enthält,
   - Anordnen (S2) eines jeweiligen ersten Blindbereichsbildpunktes (IB_SP[t-1]) des Blindbereichs (B) in einer für den zweiten Zeitpunkt (t) abgeschätzten Neu-Position,
   - Bestimmen (S3), ob die Neu-Position des jeweiligen ersten Blindbereichsbildpunktes (IB_SP[t-1]) zum zweiten Zeitpunkt (t) weiterhin innerhalb des Blindbereichs (B) liegt, und
   - Erzeugen (S4) eines jeweiligen zweiten Blindbereichsbildpunktes (IB_SP[t]) für den zweiten Zeitpunkt (t), indem der jeweilige erste Blindbereichsbildpunkt (IB_SP[t-1]) anhand von Bewegungsdaten (v_x, v_y) des Fahrzeugs (1) synthetisiert (S5A) wird, wenn die Neu-Position als innerhalb des Blindbereichs (B) liegend bestimmt wird.

2. Verfahren nach Anspruch 1, wobei der jeweilige zweite Blindbereichsbildpunkt (IB_SP[t]) für den zweiten Zeitpunkt (t) erzeugt (S4) wird, indem der jeweilige erste Blindbereichsbildpunkt (IB_SP[t-1]) anhand von wenigstens einem zum ersten Zeitpunkt (t-1) aufgenommenen, bereitgestellten Kamerabild (I_F[t-1], I_R[t-1], I_LL[t-1], I_LR[t-1]) synthetisiert (S5B) wird, wenn die Neu-Position als außerhalb des Blindbereichs (B) liegend bestimmt wird.

3. Verfahren nach Anspruch 2, wobei anhand eines aus den Bewegungsdaten (v_x, v_y) erhaltenen Bewegungsvektors (SP_V) des jeweiligen ersten Blindbereichsbildpunktes (IB_SP[t-1]) bestimmt wird, von welcher Fahrzeugkamera aus einer Mehrzahl von Fahrzeugkameras (140F, 140R, 140LL, 140LR) mit jeweils unterschiedlichen Sichtbereichen (141F, 141R, 141LL, 141LR) das Kamerabild (I_F[t-1], I_R[t-1], I_LL[t-1], I_LR[t-1]) bereitgestellt wird.

4. Verfahren nach Anspruch 3, wobei zum Bereitstellen das Kamerabild (I_F[t-1], I_R[t-1], I_LR[t-], I_RR[t-1]) der jeweiligen Kamera (140F, 140R, 140LL, 140LR) ausgewählt wird, in deren Sichtbereich (141F, 141R, 141LL, 141LR) der Bewegungsvektor (SP_V) angeordnet ist.

5. Verfahren nach Anspruch 3 oder 4, wobei genau ein einziges Kamerabild (I_F[t-1], I_R[t-1], I_LR[t-], I_RR[t-1]) pro Fahrzeugkamera (140F, 140R, 140LL, 140LR) zum Bereitstellen vorgehalten wird.

6. Verfahren nach einem der vorhergehenden Ansprüche, wobei genau ein einziges Blindbereichsbild (IB_SP[t-1]) des ersten Zeitpunkts (t-1) zum Bereitstellen vorgehalten wird.

7. Verfahren nach einem der vorhergehenden Ansprüche, wobei ein aus den jeweiligen zweiten Blindbereichsbildpunkten (IB_SP[t]) für den zweiten Zeitpunkt (t) erzeugtes, zweites Blindbereichsbild (IB_SP[t]) und wenigstens ein momentanes Kamerabild (I_F[t], I_R[t], I_LL[t], I_LR[t]) des zweiten Zeitpunkts (t) zum Anzeigen in dem Fahrzeug (1) kombiniert werden.

8. Verfahren nach einem der vorhergehenden Ansprüche, wobei bei Initialstart ein Anzeigebild (I) der Fahrzeugumgebung so weit in den Sichtbereich (141F, 141R, 141LL, 141LR) verschoben wird, dass der Blindbereich (B) ausgeblendet ist.

9. Verfahren nach einem der vorhergehenden Ansprüche, wobei der Blindbereich (B) in einer vom Fahrzeug (1) überfahrenen Bodenebene angeordnet ist.

10. Vorrichtung (100) zum Anzeigen einer Fahrzeugumgebung in einem Fahrzeug (1) während eines momentanen, zweiten Zeitpunkts (t), mit

- wenigstens einer Fahrzeugkamera (140F, 140R, 140LL, 140LR) zum Erfassen eines entsprechenden Sichtbereichs (141F, 141R, 141LL, 141LR) der Fahrzeugumgebung,
- einer Speichereinrichtung (130), in der genau ein erstes Blindbereichsbild (I_B[t-1]) vorgehalten ist, das eine Bildsynthese eines außerhalb des Sichtbereichs (141F, 141R, 141LL, 141LR) angeordneten Blindbereichs (B) der Fahrzeugumgebung zu einem dem zweiten Zeitpunkt (t) vorangehenden, ersten Zeitpunkt (t-1) enthält, und
- einer Datenverarbeitungseinrichtung (120), die dazu eingerichtet ist,

i) einen jeweiligen ersten Blindbereichsbildpunkt (IB_SP[t-1]) des Blindbereichs (B) in einer für den zweiten Zeitpunkt (t) abgeschätzten Neu-Position anzuordnen,
ii) zu bestimmen, ob die Neu-Position des jeweiligen ersten Blindbereichsbildpunktes (IB_SP[t-1]) zum zweiten Zeitpunkt (t) weiterhin innerhalb des Blindbereichs (B) liegt, und
iii) einen jeweiligen zweiten Blindbereichsbildpunkt (IB_SP[t]) für den zweiten Zeitpunkt (t) zu erzeugen, indem der jeweilige erste Blindbereichsbildpunkt (IB_SP[t-1]) anhand von Bewegungsdaten (v_x, v_y) des Fahrzeugs (1) synthetisiert (S5) wird, wenn die Neu-Position als innerhalb des Blindbereichs (B) liegend bestimmt wird.

## Claims

1. Method for displaying a vehicle's surroundings in a vehicle (1) during an instantaneous, second time point (t), having the steps of:

- providing (S1) a first blind region image (I_B[t]), which contains an image synthesis of a blind region (B) of the vehicle's surroundings, which is arranged outside a field of view (141F, 141R, 141LL, 141LR) of a vehicle camera (140F, 140R, 140LL, 140LR), at a first time point (t-1) preceding the second time point (t),
- arranging (S2) a respective first blind region image point (IB_SP[t-1]) of the blind region (B) at a new position estimated for the second time point (t),
- determining (S3) whether the new position of the respective first blind region image point (IB_SP[t-1]) continues to lie within the blind region (B) at the second time point (t), and

- generating (S4) a respective second blind region image point (IB_SP[t]) for the second time point (t) by synthesizing (S5A) the respective first blind region image point (IB_SP[t-1]) on the basis of movement data (v_x, v_y) of the vehicle (1) if the new position is determined to be lying within the blind region (B).

2. Method according to Claim 1, wherein the respective second blind region image point (IB_SP[t]) for the second time point (t) is generated (S4) by synthesizing (S5B) the respective first blind region image point (IB_SP[t-1]) on the basis of at least one provided camera image (I_F[t-1], I_R[t-1], I_LL[t-1], I_LR[t-1]) recorded at the first time point (t-1) if the new position is determined to be lying outside the blind region (B).

3. Method according to Claim 2, wherein it is determined, on the basis of a movement vector (SP V), obtained from the movement data (v_x, v_y), of the respective first blind region image point (IB SP [t-1]), by which vehicle camera of a plurality of vehicle cameras (140F, 140R, 140LL, 140LR) with in each case different fields of view (141F, 141R, 141LL, 141LR) the camera image (I_F[t-1], I_R[t-1], I_LL[t-1], I_LR[t-1]) is provided.

4. Method according to Claim 3, wherein, for provision purposes, the camera image (I_F[t-1], I_R[t-1], I_LR[t-], I_RR[t-1] of the respective camera (140F, 140R, 140LL, 140LR) in whose field of view (141F, 141R, 141LL, 141LR) the movement vector (SP_V) is arranged is selected.

5. Method according to Claim 3 or 4, wherein exactly one single camera image (I_F[t-1], I_R[t-1], I_LL[t-], I_RR[t-1]) per vehicle camera (140F, 140R, 140LL, 140LR) is kept available for provision purposes.

6. Method according to one of the preceding claims, wherein exactly one single blind region image (IB_SP[t-1]) of the first time point (t-1) is kept available for provision purposes.

7. Method according to one of the preceding claims, wherein a second blind region image (IB_SP[t]), generated from the respective second blind region image points (IB_SP[t]) for the second time point (t), and at least one instantaneous camera image (I_F[t], I_R[t], I_LL[t], I_LR[t]) of the second time point (t) are combined for display in the vehicle (1).

8. Method according to one of the preceding claims, wherein upon an initial start a display image (I) of the vehicle's surroundings is shifted so far into the field of view (141F, 141R, 141LL, 141LR) that the blind region (B) is blocked.

9. Method according to one of the preceding claims, wherein the blind region (B) is arranged in a ground plane over which the vehicle (1) travels.

10. Apparatus (100) for displaying a vehicle's surroundings in a vehicle (1) during an instantaneous, second time point (t), having

  - at least one vehicle camera (140F, 140R, 140LL, 140LR) for capturing a corresponding field of view (141F, 141R, 141LL, 141LR) of the vehicle's surroundings,
  - a storage device (130), in which exactly one first blind region image (I_B[t-1]), which contains an image synthesis of a blind region (B), arranged outside the field of view (141F, 141R, 141LL, 141LR), of the vehicle's surroundings at a first time point (t-1) preceding the second time point (t), is kept available, and
  - a data processing device (120), which is configured for

    i) arranging a respective first blind region image point (IB_SP[t-1]) of the blind region (B) at a new position estimated for the second time point (t),
    ii) determining whether the new position of the respective first blind region image point (IB_SP[t-1]) continues to lie within the blind region (B) at the second time point (t), and
    iii) generating a respective second blind region image point (IB_SP[t]) for the second time point (t) by synthesizing (S5) the respective first blind region image point (IB_SP[t-1]) on the basis of movement data (v_x, v_y) of the vehicle (1) if the new position is determined to be lying within the blind region (B).

**Revendications**

1. Procédé pour afficher un environnement de véhicule dans un véhicule (1) pendant un deuxième instant (t) momentané, comprenant les étapes suivantes :

- fourniture (S1) d'une première image de zone d'angle mort (I_B[t]), laquelle contient une synthèse d'image d'une zone d'angle mort (B) de l'environnement de véhicule disposée en dehors d'une zone de visibilité (141F, 141R, 141LL, 141LR) d'une caméra de véhicule (140F, 140R, 140LL, 140LR) à un premier instant (t-1) qui précède le deuxième instant (t),

- disposition (S2) d'un premier pixel de zone d'angle mort (IB_SP[t-1]) respectif de la zone d'angle mort (B) dans une nouvelle position estimée pour le deuxième instant (t),

- détermination (S3) si la nouvelle position du premier pixel de zone d'angle mort (IB_SP[t-1]) respectif se trouve toujours à l'intérieur de la zone d'angle mort (B) au deuxième instant (t),

- génération (S4) d'un deuxième pixel de zone d'angle mort (IB_SP[t]) respectif pour le deuxième instant (t) en synthétisant le premier pixel de zone d'angle mort (IB_SP[t-1]) respectif à l'aide de données de mouvement (v_x, v_y) du véhicule (1) lorsque la nouvelle position est déterminée comme se trouvant à l'intérieur de la zone d'angle mort (B).

2. Procédé selon la revendication 1, le deuxième pixel de zone d'angle mort (IB_SP[t]) respectif étant généré (S4) pour le deuxième instant (t) en synthétisant (S5B) le premier pixel de zone d'angle mort (IB_SP[t-1]) respectif à l'aide d'au moins une image de caméra (I_F[t-1], I_R[t-1], I_LL[t-1], I_LR[t-1]) fournie, enregistrée au premier instant (t-1), lorsque la nouvelle position est déterminée comme se trouvant à l'extérieur de la zone d'angle mort (B).

3. Procédé selon la revendication 2, la caméra de véhicule parmi une pluralité de caméras de véhicules (140F, 140R, 140LL, 140LR) ayant respectivement des zones de visibilité (141F, 141R, 141LL, 141LR) différentes qui fournit l'image de caméra (I F[t-1], I_R[t-1], I_LL[t-1], I_LR[t-1]) étant déterminée à l'aide d'un vecteur de mouvement (SP V) du premier pixel de zone d'angle mort (IB_SP[t-1]) respectif obtenu à partir des données de mouvement (v_x, v_y).

4. Procédé selon la revendication 3, la caméra (140F, 140R, 140LL, 140LR) respective sélectionnée pour la fourniture de l'image de caméra (I F[t-1], I_R[t-1], I_LR[t-], I_RR[t-1]) étant celle dans la zone de visibilité (141F, 141R, 141LL, 141LR) de laquelle est disposé le vecteur de mouvement (SP_V).

5. Procédé selon la revendication 3 ou 4, précisément une image de caméra (I_F[t-1], I_R[t-1], I_LR[t-], I_RR[t-1]) unique étant réservée par caméra de véhicule (140F, 140R, 140LL, 140LR) pour la fourniture.

6. Procédé selon l'une des revendications précédentes, précisément une image de zone d'angle mort (IB_SP[t-1]) unique du premier instant (t-1) étant réservée pour la fourniture.

7. Procédé selon l'une des revendications précédentes, une deuxième image de zone d'angle mort (IB_SP[t]), générée à partir des deuxièmes pixels de zone d'angle mort (IB_SP[t]) respectifs pour le deuxième instant (t), et au moins une image de caméra (I_F[t], I_R[t], I_LL[t], I_LR[t]) momentanée du deuxième instant (t) étant combinées pour l'affichage dans le véhicule (1).

8. Procédé selon l'une des revendications précédentes, une image affichée (I) de l'environnement de véhicule étant, lors du démarrage initial, décalée loin dans la zone de visibilité (141F, 141R, 141LL, 141LR) au point que la zone d'angle mort (B) est masquée.

9. Procédé selon l'une des revendications précédentes, la zone d'angle mort (B) étant disposée dans un plan du sol sur lequel circule le véhicule (1).

10. Arrangement (100) pour afficher un environnement de véhicule dans un véhicule (1) pendant un deuxième instant (t) momentané, comprenant

- au moins une caméra de véhicule (140F, 140R, 140LL, 140LR) destinée à capturer une zone de visibilité (141F, 141R, 141LL, 141LR) correspondante de l'environnement de véhicule,

- un dispositif de mémorisation (130), dans lequel est réservée une première image de zone d'angle mort (I_B[t-1]), laquelle contient une synthèse d'image d'une zone d'angle mort (B) de l'environnement de véhicule disposée en dehors de la zone de visibilité (141F, 141R, 141LL, 141LR) à un premier instant (t-1) qui précède le deuxième instant (t), et

- un dispositif de traitement de données (120) qui est conçu pour

i) disposer un premier pixel de zone d'angle mort (IB_SP[t-1]) respectif de la zone d'angle mort (B) dans une nouvelle position estimée pour le deuxième instant (t),

ii) déterminer si la nouvelle position du premier pixel de zone d'angle mort (IB_SP[t-1]) respectif se trouve toujours à l'intérieur de la zone d'angle mort (B) au deuxième instant (t), et

iii) générer un deuxième pixel de zone d'angle mort (IB_SP[t]) respectif pour le deuxième instant (t) en synthétisant (S5) le premier pixel de zone d'angle mort (IB_SP[t-1]) respectif à l'aide de données de mouvement (v_x, v_y) du véhicule (1) lorsque la nouvelle position est déterminée comme se trouvant à l'intérieur de la zone d'angle mort (B).

**Fig. 1**

**Fig. 2A**

Fig. 2B

Fig. 2C

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010010906 A1